# EUROPÄISCHE PATENTSCHRIFT

(11) **EP 3 901 925 B1**
(45) Veröffentlichungstag und Bekanntmachung des Hinweises auf die Patenterteilung: **25.09.2024**
(21) Anmeldenummer: 21160874.0
(22) Anmeldetag: 05.03.2021
(51) Int. Cl.: G07C 9/37, G07C 9/00, G06V 40/13

(54) **VERFAHREN ZUR ÜBERPRÜFUNG EINER ZUTRITTSBERECHTIGUNG**
METHOD FOR CHECKING ACCESS CREDENTIALS
PROCÉDÉ DE VÉRIFICATION D'UNE AUTORISATION D'ACCÈS

(30) Priorität: 24.04.2020 DE 102020111285
(43) Veröffentlichungstag der Anmeldung: 27.10.2021
(73) Patentinhaber: Carl Fuhr GmbH & Co. KG, 42579 Heiligenhaus (DE)
(72) Erfinder: Meis, Guido, 50737 Köln (DE)
(74) Vertreter: Andrejewski - Honke Patent- und Rechtsanwälte Partnerschaft mbB

(56) Entgegenhaltungen:
- WO-A1-2014/206505
- GB-A- 2 543 323

## Beschreibung

Die Erfindung betrifft ein Verfahren zur Überprüfung einer Zutrittsberechtigung einer Person bei einer Türschließanlage,
wobei in einem Speicher für eine oder mehrere zutrittsberechtigte Personen jeweils zumindest ein Fingerabdruck oder eine Anzahl sicherheitsrelevanter Merkmale eines Fingerabdrucks gespeichert werden,
wobei zur Prüfung der Berechtigung mit einem Flächensensor zumindest ein Fingerabdruck der Person aufgenommen wird und ein Vergleich mit dem gespeicherten Fingerabdruck oder mit den gespeicherten sicherheitsrelevanten Merkmalen erfolgt,
wobei der Zutritt gewährt wird, wenn ein vorgegebenes Vergleichskriterium erfüllt ist und auf diese Weise eine Übereinstimmung festgestellt wird.

Türschließanlage meint insbesondere eine sicherheitsrelevante Tür, z. B. eine Eingangstür eines Einfamilienhauses oder Mehrfamilienhauses oder auch eines gewerblich genutzten oder öffentlichen Gebäudes, z. B. einer Bank, einer Behörde oder dergleichen. Eine solche Türschließanlage weist zumindest einen Verriegelungsmechanismus zum Verriegeln und Entriegeln der Tür auf. Ergänzend oder alternativ zu den häufig vorgesehenen mechanischen Zutrittskontrollsystemen (insbesondere Schlüssel) oder auch sonstigen Zutrittskontrollsystemen mit separaten Identifizierungsmitteln (z. B. Chipkarten) werden in der Praxis zunehmend biometrische Zutrittskontrollsysteme verwendet. Bei Türschließanlagen spielt von den biometrischen Systemen insbesondere die Überprüfung des Fingerabdrucks mit einem Fingerabdrucksensor bzw. Fingerabdruckscanner eine große Rolle. In der sogenannten Anlernphase wird der Fingerabdruck einer zutrittsberechtigten Person mithilfe des Sensors aufgenommen und aus dieser Aufnahme werden die sicherheitsrelevanten Merkmale, die sogenannten Minutien extrahiert. Diese werden in einem Speicher der Schließanlage abgelegt und bei einem Zutrittsversuch werden wiederum die sicherheitsrelevanten Merkmale eines Fingerabdrucks bestimmt und mit den gespeicherten Merkmalen verglichen. Erreicht der Vergleichswert (d. h. die Anzahl der Übereinstimmungen) den Schwellwert oder überschreitet diesen, so wird der Zutritt gewährt, d. h. das Türschloss erhält einen entsprechenden Öffnungsbefehl. Dabei werden in der Praxis Fingerabdruckscanner entweder in der Ausführungsform als Zeilenscanner oder in der Ausführungsform als Flächenscanner bzw. Flächensensor eingesetzt. Das erfindungsgemäße Verfahren bezieht sich auf den Einsatz eines solchen Flächensensors. Während bei einem Zeilenscanner der relevante Fingerkuppenbereich in einer kontinuierlichen Bewegung über den Sensor gezogen werden muss, um die volle Darstellung und Auswertung der Fingerkuppe zu ermöglichen, wird bei einem Flächenscanner die Fingerkuppe zum Auslesen der Fingerkennlinien in der Praxis nicht über diese Fläche gezogen, sondern lediglich ruhend aufgelegt, so dass der gesamte, relevante Fingerkuppenbereich mit dem Flächensensoren als Ganzes aufgenommen wird.

Ein Verfahren zur Überprüfung einer Zutrittsberechtigung einer Person der eingangs beschriebenen Art ist z. B. aus der DE 10 2008 054 112 A1 bekannt. Dieses Verfahren zeichnet sich dadurch aus, dass in dem Speicher für jede zutrittsberechtigte Person sicherheitsrelevante Merkmale von zumindest zwei Fingerabdrücken gespeichert werden und das zur Überprüfung der Zutrittsberechtigung zumindest zwei Fingerabdrücke der Person aufgenommen und aus diesen jeweils die sicherheitsrelevanten Merkmale extrahiert werden.

Der Fingerscanner kann als Zeilenscanner oder als Flächenscanner ausgebildet sein.

Die in der Praxis eingesetzten Zeilenscanner haben den Vorteil, dass es zur vollen Darstellung und Auswertung einer Fingerkuppe erforderlich ist, den Fingerkuppenbereich in einer kontinuierlichen Bewegung über diesen Sensor zu ziehen. Dieses hat den Vorteil, dass keine Rückstände des Fingerabdrucks auf dem Zeilenscanner verbleiben, die von unberechtigten Personen analysiert und unberechtigt verwendet werden können. Demgegenüber besteht bei Flächenscannern in der Praxis das Problem, dass durch das bloße Auflegen der Fingerkuppe und Auslesen gegebenenfalls ein Fettabdruck auf der Sensoroberfläche verbleiben kann, der von einer unberechtigten Person durch geeignete Maßnahmen abgenommen und unberechtigt verwendet werden kann. Solche Flächenscanner werden z. B. bei der Autorisierung von Smartphones verwendet. Bei sicherheitsrelevanten Türschließanlage sind die Risiken, die sich durch einen verbleibenden Abdruck auf einem Flächenscanner ergeben, jedoch in der Regel nicht zu akzeptieren, so dass bei Türschließanlagen bislang zumeist Zeilenscanner zum Einsatz gekommen sind. In jüngster Zeit besteht jedoch das Bedürfnis, auch bei Türschließanlagen kostengünstige und einfach zu bedienenden Flächenscanner einsetzen zu können. Um die mit Flächenscannern verbundenen Sicherheitsrisiken zu reduzieren, wurden für Flächensensoren spezielle Beschichtungen entwickelt, die ein Verbleiben eines Fingerabdrucks/Fettabdrucks vermeiden sollen. Alternativ oder ergänzend wurden weitere Maßnahmen zur Vermeidung der beschriebenen Probleme in Betracht gezogen.

So wird z. B. in der DE 10 2010 031 426 A1 eine Identifikationsvorrichtung beschrieben, bei der ein Finger aufgelegt wird und der Fingerabdruck ausgewertet wird. Über den Fingersensor ist eine spezielle mechanische Abdeckung angebracht, die eine Führung des Fingers erzwingt und somit den Fingerabdruck verwischt, um Manipulationen auszuschließen.

Die WO 2014/206505 A1 beschreibt ein Verfahren zur Zwei-Faktor-Authentifizierung, bei welchem ein Fingerabdruck überprüft und außerdem ein nutzerspezifischer Code ausgewertet wird. Ein solches Verfahren soll z. B. bei Smartphones eingesetzt werden. Bei dem nutzerspezifischen Code handelt es sich um ein spezielles Muster, das eine oder mehrere Gesten aufweist, die durch einen den Sensor umgebenden Rahmen geführt werden. Im Zuge der Überprüfung erfolgt folglich nicht nur ein Vergleich des Fingerabdrucks, sondern zusätzlich muss der Nutzer noch eine bestimmte Bewegung mit dem Finger ausführen, indem er den Finger z. B. in einem bestimmten Muster von einer Seite des Rahmens zur anderen Seite oder von einer Ecke zur anderen führt. Diese Bewegung zur Eingabe des Musters soll außerdem den Vorteil haben, dass die Oberfläche des Sensors gereinigt wird.

In der DE 10 048 965 B4 wird ein tragbarer Sensor eines Fahrzeugschlüsselsystems mit einem Fingerabdrucksensor beschrieben, wobei der Fingerabdrucksensor integral einen Senderschalter aufweist. Der Senderschalter ist auf dem Boden des Fingerabdrucksensors derart vorgesehen, dass der Senderschalter durch Niederdrücken des Fingerabdrucksensors eingeschaltet werden kann, um die Fingerabdruckdaten von der Senderkomponente zu senden. Außerdem besteht die Möglichkeit, dass wir Fingerabdrucksensor zusätzlich durch den Benutzer verschoben wird, um über die Verschiebebewegung in verschiedenen Richtungen verschiedene Funktionen auszulösen.

In der US 7 496 216 B2 wird ein Fingerabdrucksensor beschrieben, der als Flächensensor oder als Zeilensensor ausgebildet sein kann. Im Zusammenhang mit einem Zeilensensor wird der Vorteil beschrieben, dass durch das Ziehen des Fingers über den Zeilensensor die Sensorfläche gereinigt wird.

Weitere Lösungen, bei denen eine Benutzerberechtigung über einen Fingerabdrucksensor erfolgt und bei dem gegebenenfalls Bewegungen zum Auslösen bestimmter Funktionen erforderlich sind, sind aus der US 9 152 842 B2, der EP 3 270 279 A1, der GB 2 543 323 A und der WO 2019/118559A1 bekannt.

Ausgehend von dem vorbekannten Stand der Technik liegt der Erfindung die Aufgabe zugrunde, ein Verfahren zur Überprüfung der Zutrittsberechtigung einer Person bei einer Türschließanlage zu schaffen, dass sich bei einfacher Bedienung durch ein hohes Maß an Sicherheit auszeichnet.

Zur Lösung dieser Aufgabe lehrt die Erfindung bei gattungsgemäßen Verfahren der eingangs beschriebenen Art, dass der Zutritt nur dann gewährt wird, wenn nach Aufnahme des Fingerabdrucks mit dem Flächensensor eine kontinuierliche Ziehbewegung des Fingers auf der Sensoroberfläche um ein vorgegebenes und gespeichertes Maß bis über die Sensorfläche hinaus festgestellt wird. Dazu wird bevorzugt mit der Aufnahme des Fingerabdrucks eine Abdruckfläche bestimmt und der Zutritt wird nur dann gewährt, wenn die kontinuierliche Ziehbewegung des Fingers auf der Sensoroberfläche in einem ausreichenden Maße über die Sensorfläche hinaus erfolgt, und zwar derart, dass zumindest 50 % der Abdruckfläche von der Sensoroberfläche entfernt wurden, vorzugsweise zumindest 70 %, besonders bevorzugt zumindest 90 %.

Die Erfindung geht dabei zunächst einmal von der Erkenntnis aus, dass sich Flächenscanner bzw. Flächensensoren für eine Zutrittskontrolle bei Türschließanlagen durch Vorteile gegenüber Zeilenscannern auszeichnen (z. B. die einfache Bedienbarkeit und zunehmend geringere Kosten), so dass erfindungsgemäß ein Flächenscanner eingesetzt wird, der einen rechteckigen (z. B. quadratischen) oder runden Querschnitt aufweisen kann, wobei der Durchmesser oder die Seitenlänge der Sensorfläche z. B. mehr als 5 mm, bevorzugt zumindest 10 mm beträgt. Ein solcher Flächenscanner lässt sich besonders kostengünstig einsetzen und einfach handhaben. Erfindungsgemäß zeichnet sich das Verfahren durch ein erhöhtes Maß an Sicherheit aus, da eine Authentifizierung nicht bereits dann erfolgt, wenn der Fingerabdruck korrekt aufgenommen und erfolgreich mit dem gespeicherten Fingerabdruck verglichen wurde, sondern es ist zwingend eine zusätzliche, kontinuierliche Ziehbewegung des Fingers auf der Sensoroberfläche erforderlich, die sicherstellt, dass ein Fingerabdruck zuverlässig verwischt wird, um Missbrauch auszuschließen. Dabei verzichtet die Erfindung auf zusätzliche Hardwaremaßnahmen und insbesondere eine zusätzliche Abdeckung, die die Wischbewegung erzwingt. Vielmehr erfolgt ausschließlich eine softwaretechnische Auswertung der Ziehbewegung, indem z. B. mit dem Flächensensoren eine Vielzahl von Bildern als zeitliche Abfolge aufgenommen werden und aus der Bildfolge die Ziehbewegung und insbesondere auch das Maß der Ziehbewegung ermittelt wird. So kann sichergestellt werden, dass eine Ziehbewegung über den Rand des Sensors hinaus erfolgen muss, so dass zuverlässig gewährleistet ist, dass kein verwertbarer Fingerabdruck auf der Sensoroberfläche verbleibt. In einer besonders bevorzugten Ausführungsform ist vorgesehen, dass keine spezifische Richtung der Ziehbewegung erforderlich ist, d. h. der Zutritt wird bei Feststellung einer Übereinstimmung und der definierten Ziehbewegung unabhängig von der Richtung der Ziehbewegung gewährt. Mit der Ziehbewegung werden folglich keinerlei weitere Funktionen verbunden, sondern es geht ausschließlich darum, dass in ausreichendem Maße ein Verwischen des Fingerabdrucks erfolgt, und zwar bis über die Sensorfläche bzw. deren Rand hinaus. Das Verfahren zeichnet sich damit durch besondere Einfachheit aus, denn es ist für die Zutrittsberechtigung nicht erforderlich, besondere Muster oder Ziehrichtungen zu erfüllen.

Der Flächensensor ist in grundsätzlich bekannter Weise als kapazitiver, optische Sensor oder anderer Sensor für die Bildverarbeitung ausgebildet, so dass mit dem Sensor mit einer bestimmten Sensorfläche ein digitales Bild des Fingerabdrucks aufgenommen werden kann. Dazu lassen sich dann in der beschriebenen Weise in einer zeitlichen Abfolge eine Vielzahl von Bildern aufnehmen und aus der Bildfolge und folglich aus den Änderungen der Bilder kann auf das Maß der Ziehbewegung geschlossen werden, so dass aus der Bildfolge auch festgestellt werden kann, wann der Finger um das erforderliche Maß von der Sensorfläche heruntergezogen wurde.

Die Überprüfung der Zutrittsberechtigung bzw. die Gewährung des Zutritts erfolgt erfindungsgemäß folglich mehrstufig. In einem ersten Schritt erkennt das System bzw. der Sensor eine Berührung der Sensoroberfläche, so dass sich in einem zweiten Schritt die Aufnahme des Fingerabdrucks und gegebenenfalls bereits die Auswertung, d. h. der Vergleich anschließen kann. In einem dritten Schritt wird überprüft, ob der Finger tatsächlich die erforderliche Ziehbewegung realisiert. Erst wenn auch diese Bedingung erfüllt ist, wird der Zutritt gewährt, indem z. B. ein Öffnungsbefehl oder Öffnungssignal (kabelgebunden oder drahtlos) an die relevante Komponente der Schließanlage, z. B. an eine Steuerung eines Motorschlosses übermittelt wird. Grundsätzlich besteht aber auch die Möglichkeit, dass nach der Aufnahme des Fingerabdrucks zunächst die Auswertung der Ziehbewegung erfolgt und dass die Auswertung des Fingerabdrucks selbst und folglich der Vergleich erst in einem anschließenden Schritt vorgenommen wird.

Die Benutzung kann durch Hilfsmittel unterstützt werden, z. B. durch optische Signale und/oder akustische Signale. So besteht zum Beispiel die Möglichkeit, dass durch ein optisches Signal und/oder ein akustisches Signal signalisiert wird, dass der Fingerabdruck erkannt wurde (und dass gegebenenfalls bereits ein erfolgreicher Vergleich erfolgt ist) und auf diese Weise wird dem Nutzer signalisiert, dass anschließend die Wischbewegung erfolgen kann bzw. erforderlich ist.

Der Sensor kann eine Sensorauflösung von z. B. mehr als 300 dpi, vorzugsweise 500 dpi oder mehr aufweisen. Zur Aufnahme der beschriebenen Bildfolge können eine Vielzahl von Bildern in einem Abstand von z. B. weniger als 100 ms, vorzugsweise weniger als 50 ms, z. B. weniger als 20 ms aufgenommen werden.

Gegenstand der Erfindung ist nicht nur das beschriebene Verfahren, sondern auch eine Zutrittskontrollvorrichtungen zur Durchführung dieses Verfahrens. Eine solche Zutrittskontrollvorrichtung weist zumindest einen Flächensensor zur Aufnahme eines Fingerabdrucks und einen Speicher zur Speicherung von Fingerabdrücken und/oder Vergleichskriterien zutrittsberechtigter Personen sowie eine Auswerteeinrichtung auf, mit der insbesondere der Vergleich der aufgenommenen Fingerabdrücke bzw. Vergleichskriterien mit den gespeicherten Fingerabdrücken bzw. Vergleichskriterien erfolgt. Die Auswerteeinrichtung kann in grundsätzlich bekannter Weise als elektronische Einrichtung auf einer Chipkarte bzw. mit einem Mikroprozessor eingerichtet sein. Erfindungsgemäß ist die Zutrittskontrollvorrichtung und insbesondere die Auswerteeinrichtung für die Durchführung des beschriebenen Verfahrens eingerichtet. D. h. die Auswerteeinrichtung ist (mit einem Algorithmus) so eingerichtet bzw. programmiert, dass zum einen der grundsätzlich bekannte Vergleich des Fingerabdrucks mit gespeicherten Fingerabdrücken erfolgt und dass zum anderen der Zutritt nur dann gewährt wird, wenn nach Aufnahme des Fingerabdrucks mit dem Flächensensoren eine kontinuierliche Ziehbewegung des Fingers auf der Sensoroberfläche um ein vorgegebenes und gespeichertes Maß bis über die Sensorfläche hinaus festgestellt wird. Die Auswerteeinrichtung wird folglich so eingerichtet und programmiert, dass die im Zusammenhang mit dem Verfahren beschriebenen Maßnahmen realisierbar sind bzw. realisiert werden.

Die erfindungsgemäße Vorrichtung weist ein Gehäuse auf, das im Bereich einer Tür, z. B. an einem Türblatt, einem Türrahmen oder neben einem Türrahmen montiert ist und dass mit dem Flächensensor als Fingerscanner ausgerüstet ist. Außerdem kann in das Gehäuse die erforderliche Elektronik, insbesondere ein Speicher und eine Auswerteeinrichtung, z.B. auf einer Chipkarte, integriert sein. Das Gehäuse weist eine Frontfläche auf und bevorzugt ist der Flächensensor in diese Frontfläche integriert, z. B. in eine Durchbrechung, Ausnehmung oder Vertiefung in der Frontfläche eingesetzt.

In einer ersten bevorzugten Ausführungsform ist der Flächensensoren derart in die Frontfläche integriert, dass zwischen der Sensoroberfläche und der ( die Sensoroberfläche umgebenden) Frontfläche des Gehäuses ein Spalt gebildet ist, der eine bestimmte Breite und Tiefe aufweist, so dass der Finger im Zuge der Benutzung und folglich im Zuge der Ziehbewegung von der Sensoroberfläche in den Bereich des Spaltes und über den Spalt hinaus gezogen wird.

In einer zweiten bevorzugten Ausführungsform ist der Flächensensoren derart in die Frontfläche integriert, dass eine die Sensoroberfläche umgebende Rampe mit ansteigender Flanke gebildet ist, so dass der Finger im Zuge der Zieh- bzw. Wischbewegung von der Sensoroberfläche in den Bereich der umlaufenden Rampe und dort in aufsteigender Richtung gezogen wird.

Die beschriebenen Ausführungsformen haben den Vorteil, dass zum einen die Ziehbewegung unterstützt und geleitet wird. Zum anderen wird sichergestellt, dass nicht nur an der Sensoroberfläche sondern auch an den übrigen Komponenten des Gehäuses keine verwertbaren Restabdrücke verbleiben. So unterbricht der Spalt die Möglichkeit, dass beim Herunterziehen von der Sensoroberfläche im Randbereich Fingerabdrücke verbleiben. Die Rampe, die gegebenenfalls sehr schmal sein kann, so dass auf der Rampe selbst keine verwertbaren Fingerabdrücke verbleiben, führt dazu, dass der Finger bei der Ziehbewegung in aufsteigender Richtung geführt und damit vom Gehäuse abgehoben wird, so dass am Gehäuse keine verwertbaren Fingerabdrücke verbleiben. Insgesamt wird durch diese bevorzugten Maßnahmen die Sicherheit weiter erhöht.

Gegenstand der Erfindung ist im Übrigen auch eine Schließanlage für eine Tür, wobei eine solche Schließanlage ein Türschloss, z. B. ein Motorschloss für eine elektromotorische Entriegelung (und gegebenenfalls Verriegelung) aufweist und außerdem eine Zutrittskontrollvorrichtung der beschriebenen Art aufweist. Das Schloss bzw. Motorschloss ist z. B. mit einem Motor für die Betätigung der jeweiligen Verriegelungselemente zum Zwecke der Entriegelung ausgerüstet. Die Schließanlage kann außerdem eine Steuerung für den Motor aufweisen. Mit dieser Steuerung kann z. B. die erfindungsgemäße Zutrittskontrollvorrichtung verbunden werden, und zwar drahtlos oder drahtgebunden. Mit der Zutrittskontrollvorrichtung kann z.B. ein elektronischer Öffnungsbefehl oder Öffnungsimpuls erzeugt werden, der drahtlos oder drahtgebunden an das Motorschloss oder an eine Steuerung übertragen wird.

Bei der Auswertung und Vergleichsprüfung des Fingerabdrucks kann auf grundsätzlich bekannte Maßnahmen zurückgegriffen werden. So kann tatsächlich ein Vergleich der Bilder, d. h. des aufgenommenen Fingerabdrucks und des gespeicherten Fingerabdrucks erfolgen. In besonders bevorzugter Ausführungsformen werden jedoch aus der Aufnahme des Fingerabdrucks sicherheitsrelevante Merkmale (Minutien) extrahiert, wobei die aufgenommenen bzw. ermittelten Merkmale mit gespeicherten Merkmalen verglichen werden und aus der Anzahl der übereinstimmenden Merkmale wird ein Vergleichswert bestimmt, wobei der Zutritt gewährt wird, wenn der Vergleichswert einen vorgegebenen Schwellwert erreicht oder überschreitet. Der Vergleichswert ist vorzugsweise ein Zahlwert bzw. eine natürliche Zahl, nämlich die Anzahl der tatsächlich bei einer Prüfung ermittelten Übereinstimmungen. Auch der Schwellwert ist vorzugsweise ein Zahlwert bzw. eine natürliche Zahl, nämlich die erforderliche (minimale) Anzahl von Übereinstimmungen, bei welcher ein Zutritt gewährt wird.

Im Folgenden wird die Erfindung anhand von Zeichnungen näher erläutert, die jedoch lediglich Ausführungsbeispiele darstellen. Es zeigen:
Fig. 1 eine erste Ausführungsform einer Zutrittskontrollvorrichtung und
Fig. 2 eine zweite Ausführungsform der Erfindung.

In den Figuren ist in zwei verschiedenen Ausführungsformen eine Zutrittskontrollvorrichtung 1 für die Überprüfung der Zutrittsberechtigung einer Person bei einer Schließanlage dargestellt, wobei diese Zutrittskontrollvorrichtung 1 für eine biometrische Fingerabdrucküberprüfung ausgebildet ist. Die Zutrittskontrollvorrichtung weist ein Gehäuse 3 auf und kann z. B. im Bereich einer Tür, d. h. an einem Türblatt, einem Türrahmen oder neben einem Türrahmen angeordnet sein, so dass sich eine Person, die die Tür öffnen möchte, zunächst über die Zutrittskontrollvorrichtung Authentifizierung muss. Dazu weist die Zutrittskontrollvorrichtung einen Fingerabdruckscanner 2 in der Ausführungsform als Flächensensor 2 zur Aufnahme eines Fingerabdrucks auf. In dem Gehäuse 3 ist zumindest eine Auswerteeinrichtung und ein Speicher zur Speicherung von Fingerabdrücken und/oder Vergleichskriterien zutrittsberechtigter Personen angeordnet. Im Zuge der Benutzung wird eine solche Zutrittskontrollvorrichtungen 1 angelernt, indem ein oder mehrere Fingerabdrücke zutrittsberechtigter Personen eingelesen und in dem Speicher hinterlegt werden. Zur Prüfung der Berechtigung wird mit dem Flächensensor 2 ein Fingerabdruck der Person aufgenommen und es erfolgt ein Vergleich mit einem gespeicherten Fingerabdruck oder mit gespeicherten, sicherheitsrelevanten Merkmalen. Der Zutritt wird anschließend nur dann gewährt, wenn ein vorgegebenes Vergleichskriterium erfüllt ist und damit eine Übereinstimmung festgestellt wird. Dieser Vergleich wird durch die entsprechend ausgebildete bzw. programmierte Auswerteeinrichtung vorgenommen.

Während bei herkömmlichen Fingerscanvorrichtungen der Zutritt in der Regel unmittelbar dann gewährt wird, wenn nach einem Vergleich das vorgegebene Vergleichskriterium erfüllt ist, ist erfindungsgemäß vorgesehen, dass der Zutritt nur dann gewährt wird, wenn nach Aufnahme des Fingerabdrucks mit dem Flächensensoren 2 eine kontinuierliche Ziehbewegung des Fingers auf der Sensoroberfläche um ein vorgegebenes und gespeichertes Maß bis über die Sensorfläche hinaus festgestellt wird. Die Überprüfung des Zutritts erfolgt folglich mehrstufig, wobei die zusätzliche Stufe der "Ziehbewegung" nicht als sicherheitsrelevante, benutzerspezifische Prüfung eines zusätzlichen Vergleichskriteriums oder Berechtigungskriteriums dient, sondern es soll sichergestellt werden, dass durch eine solche Ziehbewegung im Sinne einer Wischbewegung eventuelle Fingerabdrücke von der Sensoroberfläche entfernt werden. Damit kann zuverlässig vermieden werden, dass zu einem späteren Zeitpunkt eine unberechtigte Person einen auf der Sensoroberfläche verbliebenen Fingerabdruck abnimmt bzw. auswertet, um sich anschließend einen unbefugten Zutritt zu verschaffen. Von besonderer Bedeutung ist erfindungsgemäß die Tatsache, dass nicht nur eine beliebige Ziehbewegung bzw. Wischbewegung gefordert wird, sondern dass diese Ziehbewegung bis über die Sensorfläche 2 hinaus erfolgen muss, um zuverlässig Restabdrücke zu vermeiden. Dazu wird mit der Aufnahme des Fingerabdrucks eine Abdruckfläche bestimmt und der Zutritt wird nur dann gewährt, wenn die kontinuierliche Zielbewegung des Fingers auf der Sensoroberfläche derart erfolgt, dass zumindest 50 % der Abdruckfläche von der Sensoroberfläche entfernt wurden, vorzugsweise zumindest 70 %, besonders bevorzugt zumindest 90 %. Es reicht folglich nicht, eine Wischbewegung auf der Sensoroberfläche durchzuführen, sondern diese Wischbewegung muss sich bis über den Rand der Sensoroberfläche hinaus vollziehen, so dass keine verwertbaren Restabdrücke auf der Sensoroberfläche verbleiben. Interessant ist dabei, dass die Ziehbewegung nicht als zusätzliches Sicherheitsmerkmal ausgewertet wird, so dass es auf die Richtung der Ziehbewegung nicht ankommt. Der Zutritt wird bei Feststellung einer Übereinstimmung und der definierten Ziehbewegung folglich unabhängig von der Richtung der Ziehbewegung gewährt.

Um die Ziehbewegung auszuwerten, werden mit dem Flächensensor eine Vielzahl von Bildern in einer zeitlichen Abfolge aufgenommen und aus dieser Bildfolge kann durch eine geeignete Auswertung mit der Auswerteeinrichtung die Ziehbewegung analysiert und folglich das Maß der Ziehbewegung bestimmt werden. Es kann folglich aus der Auswertung der Bildfolge festgestellt werden, ob der Finger tatsächlich in ausreichendem Maße von der Sensoroberfläche entfernt wurde.

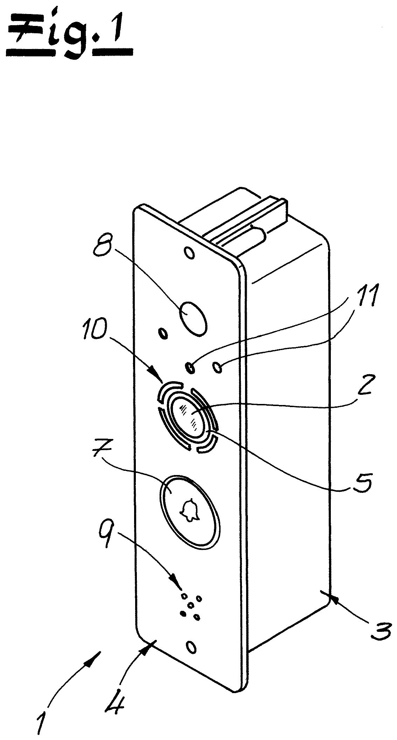

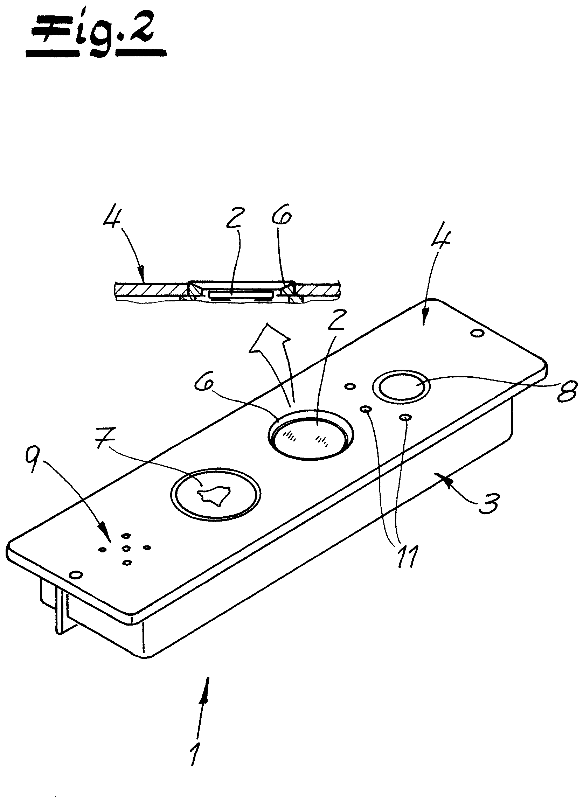

In bevorzugter Weiterbildung wird durch zusätzliche Maßnahmen sichergestellt, dass ein Restabdruck nicht nur auf der Sensoroberfläche zuverlässig vermieden wird, sondern auch in den angrenzenden Gehäusebereichen, so dass auch in den angrenzenden Gehäusebereichen keine unbefugte Auswertung oder Entnahme eines Fettabdrucks möglich ist. Dazu ist es zunächst zweckmäßig, die Gehäuseoberflächen in entsprechender Weise auszugestalten, z. B. durch Strukturierungen, Profilierungen oder dergleichen. Interessant ist, dass sich solche Gehäuseoberflächen, z. B. eines Kunststoffgehäuses, in einfacher Weise entsprechend ausgestalten lassen, ohne dass dieses Auswirkung auf die Oberfläche des Fingerscanners hat. Zusätzlich können weitere Maßnahmen interessant sein. Dazu wird auf die beiden Ausführungsbeispiele in den Figuren 1 und 2 verwiesen.

So zeigt Figur 1 eine Ausführungsform, bei der der Flächensensor 2 derart in die Frontfläche 4 des Gehäuses 3 integriert ist, dass zwischen der Sensoroberfläche und der Frontfläche 4 des Gehäuses 3 ein Spalt 5 gebildet ist, der eine bestimmte Breite und Tiefe aufweist. Der Finger wird im Zuge der Benutzung von der Sensoroberfläche in den Bereich des Spaltes 5 und über den Spalt 5 hinausgezogen. Denn der Benutzer ist für eine Zutrittsberechtigung gezwungen, den Finger in ausreichendem Maße von der Sensoroberfläche zu ziehen, so dass er zwangsläufig den Finger in den Bereich des Spaltes bewegt, in dem keine Restabdrücke verbleiben können.

In der alternativen Ausführungsform nach Figur 2 ist der Flächensensoren 2 derart in die Frontfläche 4 integriert, dass eine die Sensoroberfläche umgebende Rampe 6 mit ansteigender Flanke gebildet ist. Die Frontfläche 4 des Gehäuses 3 ist folglich so ausgebildet, dass die Sensoroberfläche gegenüber der Frontfläche 4 oder zumindest gegenüber einer Umrandung versenkt bzw. vertieft angeordnet ist und dass um den Sensor 2 herum eine Rampe 6 gebildet ist. Die für die Zutrittsberechnung zwingend erforderliche Ziehbewegung führt häufig dazu, dass der Finger von der Sensoroberfläche entlang der ansteigenden Flanke 6 in aufsteigender Richtung gezogen wird und damit von der Frontfläche 4 abgehoben wird. Damit wird zum einen auch weiterhin das Verwischen des Restabdrucks auf der Sensoroberfläche gewährleistet. Zum anderen wird vermieden, dass auf der die Sensoroberfläche umgebenden Frontfläche 4 des Gehäuses 3 Restabdrücke verbleiben.

Im Übrigen ist den Figuren erkennbar, dass die Zutrittskontrollvorrichtungen 1 bzw. das Gehäuse der Zutrittskontrollvorrichtungen mit zusätzlichen Komponenten für weitere Funktionen ausgerüstet sein kann. So ist in Figur 1 ein zusätzlicher Klingelschalter 7 z. B. im Sinne eines Klingel-Touchpads für eine Türklingel vorgesehen. Ferner ist eine Kamera 8 angedeutet, die z. B. Bestandteil einer Gegensprechanlage sein kann. Dabei kann auf bekannte Maßnahmen zurückgegriffen werden.

Ergänzend können ein Lautsprecher 9 und/oder ein Mikrofon 10 vorgesehen sein, die ebenfalls Bestandteil einer Gegensprechanlage sind (vgl. Figur 1).

Schließlich ist in Figur 1 angedeutet, dass in die Frontfläche LEDs 11 oder Infrarot LEDs integriert sein können. Im Falle von optisch sichtbaren LEDs können diese z. B. dazu dienen, bestimmte Funktionen zu visualisieren. So kann zum Beispiel optional vorgesehen sein, dass zunächst nach Identifizierung eines Fingerabdrucks durch eine entsprechende optische Anzeige (z. B. grün oder rot) signalisiert wird, ob der Fingerabdruck für eine Zutrittsberechtigung positiv erkannt wurde oder nicht. Der Nutzer weiß anschließend, dass nach der Identifizierung die Ziehbewegung erforderlich ist, so dass sichergestellt ist, dass die Ziehbewegung erst nach einer ausreichenden Aufnahme des Fingerabdrucks erfolgt.

## Patentansprüche

1. Verfahren zur Überprüfung einer Zutrittsberechtigung einer Person bei einer Türschließanlage,
wobei in einem Speicher für eine oder mehrere zutrittsberechtigte Personen jeweils zumindest ein Fingerabdruck oder eine Anzahl sicherheitsrelevanter Merkmale eines Fingerabdrucks gespeichert werden,
wobei zur Prüfung der Berechtigung mit einem Flächensensor zumindest ein Fingerabdruck der Person aufgenommen wird und ein Vergleich mit dem gespeicherten Fingerabdruck oder mit den gespeicherten sicherheitsrelevanten Merkmalen erfolgt,
wobei der Zutritt gewährt wird, wenn ein vorgegebenes Vergleichskriterium erfüllt ist und damit eine Übereinstimmung
**dadurch gekennzeichnet,**
**dass** der Zutritt nur dann gewährt wird, wenn nach Aufnahme des Fingerabdrucks mit dem Flächensensor eine kontinuierliche Ziehbewegung des Fingers auf der Sensoroberfläche um ein vorgegebenes und gespeichertes Maß bis über die Sensoroberfläche hinaus festgestellt wird, wobei mit der Aufnahme des Fingerabdrucks eine Abdruckfläche bestimmt wird und der Zutritt nur dann gewährt wird, wenn die kontinuierliche Ziehbewegung des Fingers auf der Sensoroberfläche derart erfolgt, dass zumindest 50 % der Abdruckfläche von der Sensoroberfläche entfernt wurden.

2. Verfahren nach Anspruch 1, **dadurch gekennzeichnet, dass** der Zutritt nur dann gewährt wird, wenn die kontinuierliche Ziehbewegung des Fingers auf der Sensoroberfläche derart erfolgt, dass zumindest 70 % der Abdruckfläche von der Sensoroberfläche entfernt wurden, vorzugsweise zumindest 90 %..

3. Verfahren nach Anspruch 1 oder 2, **dadurch gekennzeichnet, dass** der Zutritt bei Feststellung einer Übereinstimmung und der definierten Ziehbewegung unabhängig von der Richtung der Ziehbewegung gewährt wird.

4. Verfahren nach einem der Ansprüche 1 bis 3, **dadurch gekennzeichnet, dass** die Ziehbewegung ermittelt wird, indem mit dem Flächensensor eine zeitliche Abfolge einer Vielzahl von Bildern aufgenommen und aus der Bildfolge das Maß der Ziehbewegung bestimmt wird.

5. Verfahren nach einem der Ansprüche 1 bis 4, **dadurch gekennzeichnet, dass** zur Prüfung der Berechtigung zumindest ein Fingerabdruck der Person aufgenommen und aus der Aufnahme sicherheitsrelevante Merkmale extrahiert werden, wobei die aufgenommenen Merkmale mit gespeicherten, sicherheitsrelevanten Merkmalen eines Fingerabdrucks der Person verglichen werden und aus der Anzahl der übereinstimmenden Merkmale ein Vergleichswert bestimmt wird, wobei der Zutritt gewährt wird, wenn der Vergleichswert einen vorgegebenen Schwellwert erreicht oder überschreitet.

6. Zutrittskontrollvorrichtungen für die Überprüfung der Zutrittsberechtigung einer Person bei einer Türschließanlage mit, einem Flächensensor zur Aufnahme eines Fingerabdrucks, einem Speicher zur Speicherung von Fingerabdrücken und/oder Vergleichskriterien zutrittsberechtigter Personen und einer Auswerteeinrichtung,
**dadurch gekennzeichnet, dass** die Zutrittskontrollvorrichtung für die Durchführung eines Verfahrens zur Überprüfung der Zutrittsberechtigung nach einem der Ansprüche 1 bis 5 eingerichtet ist.

7. Vorrichtung nach Anspruch 6, mit einem Gehäuse, das eine Frontfläche aufweist, in welche der Flächensensoren integriert ist.

8. Vorrichtung nach Anspruch 7, **dadurch gekennzeichnet, dass** der Flächensensoren derart in die Frontfläche integriert ist, dass zwischen der Sensoroberfläche und der Frontfläche des Gehäuses ein Spalt vorgegebener Breite und Tiefe gebildet ist, so dass der Finger im Zuge der Benutzung von der Sensoroberfläche in den Bereich des Spaltes und über den Spalt hinausgezogen wird.

9. Vorrichtung nach Anspruch 7, **dadurch gekennzeichnet, dass** der Flächensensor derart in die Frontfläche integriert ist, dass eine die Sensoroberfläche umgebende Rampe mit ansteigender Flanke gebildet ist, so dass der Finger im Zuge der Ziehbewegung von der Sensoroberfläche in den Bereich der umlaufenden Rampe und dort in aufsteigender Richtung gezogen wird.

10. Schließanlage für eine Tür, mit einem Türschloss und mit einer Zutrittskontrollvorrichtung nach einem der Ansprüche 6 bis 8.

## Claims

1. A method for checking a person's access authorisation in a door-closing system,
wherein at least one fingerprint or a number of security-relevant features of a fingerprint in each case for one or more persons with access authorisation are stored in a memory,
wherein, to check the authorisation, at least one fingerprint of the person is captured using an area sensor, and a comparison is made with the stored fingerprint or with the stored security-relevant features,
wherein access is granted when a predefined comparison criterion is met, and thus a match
**characterised in that**
access is granted only when, after the fingerprint has been captured with the area sensor, a continuous dragging movement of the finger on the sensor surface by a predefined and stored extent to beyond the sensor surface is established, wherein a print area is determined when the fingerprint is captured, and access is granted only when the continuous dragging movement of the finger on the sensor surface takes place such that at least 50% of the print area has been removed from the sensor surface.

2. The method according to Claim 1, **characterised in that** access is granted only when the continuous dragging movement of the finger on the sensor surface takes place such that at least 70%, preferably at least 90%, of the print area has been removed from the sensor surface.

3. The method according to Claim 1 or 2, **characterised in that** access is granted when a match and the defined dragging movement are established, independently of the direction of the dragging movement.

4. The method according to one of Claims 1 to 3, **characterised in that** the dragging movement is ascertained by capturing a temporal sequence of a plurality of images using the area sensor and determining the extent of the dragging movement from the image sequence.

5. The method according to one of Claims 1 to 4, **characterised in that** to check the authorisation, at least one fingerprint of the person is captured, and security-relevant features are extracted from the image, wherein the captured features are compared with stored, security-relevant features of a fingerprint of the person, and a comparison value is determined from the number of matching features, wherein access is granted when the comparison value meets or exceeds a predefined threshold value.

6. Access control devices for checking a person's access authorisation in a door-closing system, having an area sensor for capturing a fingerprint, a memory for storing fingerprints and/or comparison criteria of persons with access authorisation, and an evaluator, **characterised in that** the access control device is configured to carry out a method for checking access authorisation according to one of Claims 1 to 5.

7. The device according to Claim 6, having a housing that has a front face in which the area sensor is integrated.

8. The device according to Claim 7, **characterised in that** the area sensor is integrated in the front face such that a gap of predefined width and depth is formed between the sensor surface and the front face of the housing, so that the finger is dragged from the sensor surface into the region of the gap and beyond the gap during use.

9. The device according to Claim 7, **characterised in that** the area sensor is integrated in the front face such that a ramp is formed, which surrounds the sensor surface and has a rising flank, so that the finger is dragged from the sensor surface into the region of the surrounding ramp and in a rising direction there during the dragging movement.

10. A closing system for a door, having a door lock and an access control device according to one of Claims 6 to 8.

## Revendications

1. Procédé, destiné à vérifier un droit d'accès d'une personne sur une installation de fermeture de porte,
lors duquel, dans une mémoire dédiée à une ou plusieurs personnes disposant d'un droit d'accès, l'on mémorise chaque fois au moins une empreinte digitale ou un nombre de caractéristiques déterminantes en matière de sécurité d'une empreinte digitale,
pour la vérification du droit, à l'aide d'un capteur de surface, au moins une empreinte digitale de la personne étant enregistrée et une comparaison étant effectuée avec l'empreinte digitale mémorisée ou avec les caractéristiques déterminantes en matière de sécurité mémorisées,
l'accès étant accordé si un critère de comparaison prédéfini et donc une concordance est satisfait(e),
**caractérisé**
**en ce que** l'accès n'est accordé que si après l'enregistrement de l'empreinte digitale à l'aide du capteur de surface, un mouvement de glissement continu du doigt sur la surface du capteur, d'une dimension prédéfinie et mémorisée jusqu'au-delà de la surface du capteur est constaté, avec l'enregistrement de l'empreinte digitale, une surface d'empreinte étant déterminée et l'accès n'étant accordé que si le mouvement de glissement continu du doigt sur la surface du capteur s'effectue de la sorte qu'au moins 50 % de la surface d'empreinte aient été retirés de la surface du capteur.

2. Procédé selon la revendication 1, **caractérisé en ce que** l'accès n'est accordé que si le mouvement de glissement du doigt sur la surface du capteur s'effectue de la sorte qu'au moins 70 %, de préférence au moins 90 % de la surface d'empreinte aient été retirés de la surface du capteur.

3. Procédé selon la revendication 1 ou 2, **caractérisé en ce que** l'accès lors de la constatation d'une concordance et du mouvement de glissement défini est accordé indépendamment de la direction du mouvement de glissement.

4. Procédé selon l'une quelconque des revendications 1 à 3, **caractérisé en ce que** le mouvement de glissement est déterminé, **en ce qu'**à l'aide du capteur de surface, une séquence chronologique d'une pluralité d'images est enregistrée et à partir de la séquence d'images est déterminée la dimension du mouvement de glissement.

5. Procédé selon l'une quelconque des revendications 1 à 4, **caractérisé en ce que** pour vérifier le droit, au moins une empreinte digitale de la personne est enregistrée et de l'enregistrement sont extraites des caractéristiques déterminantes en matière de sécurité, les caractéristiques enregistrées étant comparées avec des caractéristiques déterminantes en matière de sécurité d'une empreinte digitale de la personne et à partir du nombre des caractéristiques concordantes étant déterminée une valeur de comparaison, l'accès étant accordé si la valeur de comparaison atteint ou dépasse une valeur seuil prédéfinie.

6. Dispositif de contrôle d'accès, destiné à vérifier le droit d'accès d'une personne sur une installation de fermeture de porte, pourvu d'un capteur de surface pour l'enregistrement d'une empreinte digitale, d'une mémoire pour la mémorisation d'empreintes digitales et / ou de critères de comparaison de personnes
**caractérisé en ce que** le dispositif de contrôle d'accès est configuré pour réaliser un procédé destiné à vérifier le droit d'accès selon l'une quelconque des revendications 1 à 5.

7. Dispositif selon la revendication 6, pourvu d'un boîtier, lequel comporte une face frontale, dans laquelle est intégré le capteur de surface.

8. Dispositif selon la revendication 7, **caractérisé en ce que** le capteur de surface est intégré dans la face frontale de telle sorte qu'entre la surface du capteur et la face frontale du boîtier soit constituée une fente de largeur et de profondeur prédéfinies, de sorte qu'en cours d'utilisation de la surface du capteur, le doigt soit tiré dans la zone de la fente et au-delà de la fente.

9. Dispositif selon la revendication 7, **caractérisé en ce que** le capteur de surface est intégré dans la face frontale de sorte à constituer une rampe à flanc montant entourant la surface du capteur, de sorte qu'au cours du mouvement de glissement, le doigt soit tiré de la surface du capteur dans la zone de la rampe périphérique et d'ici en direction montante.

10. Système de fermeture pour une porte, pourvue d'une serrure de porte et d'un dispositif de contrôle d'accès selon l'une quelconque des revendications 6 à 8.
